# EUROPEAN PATENT APPLICATION

(11) **EP 2 361 961 A2**
(43) Date of publication of application: **31.08.2011**
(21) Application number: 11155089.3
(22) Date of filing: 18.02.2011
(51) Int. Cl.: C10L 1/16, C10L 1/08

(54) **Advanced fuel compositions from renewable sources, and related methods for making and using the fuel**

(30) Priority: 23.02.2010 US 710955
(71) Applicant: General Electric Company, Schenectady, NY 12345 (US)
(72) Inventor: Derr, Daniel Lawrence, Niskayuna, NY 12309 (US); Deluga, Gregg Anthony, Niskayuna, NY 12309 (US)
(74) Representative: Szary, Anne Catherine

(57) **Abstract**

A method for preparing a fuel composition is described, and includes the step of preparing a bio-derived fuel component that contains a mixture of iso-saturated alkanes and normal-saturated alkanes. The method further includes the step of determining if the ratio of iso-saturated alkanes to normal-saturated alkanes is at least about 2.0. If that requirement is met, the bio-derived fuel component is usually combined with a petroleum-derived component, resulting in the fuel composition. Related compositions are also described, in which the weight ratio of iso-saturated alkanes to normal-saturated alkanes is at least about 2.0; and the composition has a freeze point less than about -50°C.

## Description

This invention generally relates to fuel compositions. Some specific embodiments of the invention are directed to jet fuel compositions which are at least partially bio-based, and which exhibit a desirable combination of physical and performance characteristics.

### BACKGROUND OF THE INVENTION

The projected, long-term shortages in the availability of quality fossil fuels has prompted tremendous interest in the development of renewable sources of fuels. One of the most attractive sources for such fuel is biomass, which can be used to prepare a variety of different types of fuel - some of which are referred to as "biofuel", or "biodiesel". In recent years, there has been a considerable amount of research in formulating bio-based compositions which can be used as aviation fuels.

The physical, chemical, and overall performance requirements for aviation fuel are relatively strict. Experimental biofuels, while meeting many of those requirements, are often deficient in the case of temperature-dependent properties. For example, military specifications require that jet fuel be completely resistant to freezing characteristics, e.g., the formation of solid crystals as low as about -47°C. (This temperature roughly corresponds to those present in aircraft operating at 31,000 feet). As another example, biodiesel fuels often do not function well in diesel engines, under cold weather conditions. The initial appearance of freezing properties are often referred to as "clouding" zones.

Different methods to address the clouding problem have been attempted in the art. Some of them are described in U.S. Patent Publication 2008/0092436 A1(Seames et al). Most are based on "winterization" techniques. For example, chemical components that solidify above the target freeze point can be physically removed. In other cases, specialized additives that inhibit solidification may be incorporated into the fuel. In some situations, attempts have been made to chemically modify the actual fuel composition, to address the freezing problem.

These techniques have achieved variable levels of success - none entirely satisfactory. As an example, the physical removal of freezing-substances may require cycles of chilling, distilling, and/or filtering. This can be a relatively long process, and the composition which is now free of the solid components often would not meet all of the other requirements for the fuel, e.g., density and combustion characteristics.

Similarly, the use of various compounds as additives in the fuel can be beneficial in inhibiting nucleation and crystallization. (The mechanism appears to involve the bonding of the additives to frozen molecules, so that frozen molecules are prevented from bonding with each other and agglomerating). However, as noted in Seames et al, this technique appears to sometimes have a greater effect on the "pour point" of the fuel, as compared to the cloud point. (The cloud point is viewed as being the more critical property, in terms of low temperature capabilities).

The chemical modification of the fuel constituents to improve freeze point properties has often involved a modification of the transesterification process that converts free fatty acid oils into biodiesel. One common approach calls for the use of branched chain alcohols to esterify the bio-crop oil, rather than using methanol. (Branched esters often have lower freezing points than similar, straight-chain compounds). However, the chemical modification techniques that have been developed so far do not appear to have been very successful in meeting the cold-flow requirements of aviation fuels. Moreover, these techniques can potentially result in the fuel being deficient, in terms of some of the other important requirements described previously.

Other types of materials based partially or entirely on biomass have been prepared and evaluated. As an example, pyrolysis oil is a synthetic fuel obtained by the destructive distillation of dried biomass. While pyrolysis oil can potentially be used to prepare stable bio-crude oil fractions for some end uses, it does not have the properties for any realistic application to aviation fuel. For example, pyrolysis oil contains an excessive amount of oxygen; has a relatively poor energy density; and would not have the cold-temperature properties required for such a demanding application.

Another potential fuel source is based on isoprenoids, which can apparently be prepared from bio-sources (e.g., microbes), using various biosynthesis techniques. (Isoprenoids are derived from isoprene, a five-carbon hydrocarbon, with a branched-chain structure, and can naturally be found in some crude oil fractions). While isoprenoid-based materials may show some promise, they also do not appear to have the cold-temperature and energy density attributes required for bio-fuels.

In view of many of these considerations, it should be apparent that new fuel compositions that are suitable for aviation use would be welcome in the art. The compositions should be based entirely or partially on bio-derived materials, and should have acceptable properties, such as freeze point, flash point, density, and combustion characteristics. Moreover, new techniques for determining if bio-based fuels would have the freeze-point characteristics necessary for aviation applications would also be of great interest in the industry.

### BRIEF DESCRIPTION OF THE INVENTION

One embodiment of this invention is directed to a method for preparing a fuel composition. The method comprises the steps of:
(i) preparing a bio-derived fuel component comprising a mixture of iso-saturated alkanes and normal-saturated alkanes;
(ii) determining if the ratio of iso-saturated alkanes to normal-saturated alkanes in the bio-derived component is at least about 2.0; and
(iii) combining the bio-derived fuel component with a petroleum-derived component if the ratio of iso-saturated alkanes to normal-saturated alkanes in the bio-derived component is determined to be at least about 2.0;
   wherein the aromatic content of the petroleum-derived component is at least about 16 % by volume, as measured by ASTM D2425; and wherein the resulting fuel composition is characterized as having:
   (I) a flash point of at least about 35°C;
   (II) a freeze point less than about -50°C;
   (III) a fuel density of at least about 0.73 g/ml; and
   (IV) an energy density of at least about 44 MJ/kg.

Another embodiment is directed to a fuel composition, comprising
a) about 59 volume percent to about 92 volume percent of a mixture of iso-saturated alkanes and normal-saturated alkanes having a flash point in the range of about 35°C to about 60°C;
b) about 8 volume percent to about 25 volume percent aromatic compounds; and
c) about 0.05 volume percent to about 15 volume percent cyclic compounds;
   wherein the weight ratio of iso-saturated alkanes to normal-saturated alkanes is at least about 2.0; the composition has a freeze point less than about -50°C; and
   wherein at least a portion of the fuel composition is derived from an upgraded bio-oil that is extracted from a bio-oil feedstock; and
   wherein a byproduct from the extraction step is treated to produce a hydrogen-containing gas used in the upgrading step.

An additional embodiment of the invention is directed to a method for lowering the freeze point of a hydrocarbon fuel composition which comprises a mixture of iso-saturated alkanes and normal-saturated alkanes having a flash point of at least about 35°C. The method comprises the step of increasing the weight ratio of iso-saturated alkanes to normal-saturated alkanes in the composition, from a ratio of about 1.0 to at least about 2.0.

### BRIEF DESCRIPTION OF THE DRAWINGS

FIG. 1 is a plot of alkane carbon number as a function of alkane mass percent, for a petroleum-based sample.

FIG. 2 is a plot of alkane carbon number as a function of alkane mass percent, with estimated proportions of n-alkane and i-alkane compounds, for a petroleum-based sample.

FIG. 3 is a plot of n-alkane and i-alkane compounds, as a function of mass percent, for a petroleum-derived sample.

FIG. 4 is a plot of n-alkane and i-alkane compounds, as a function of mass percent, for a bio-derived sample.

FIG. 5 is another plot of n-alkane and i-alkane compounds, as a function of mass percent, for a bio-derived sample.

### DETAILED DESCRIPTION OF THE INVENTION

The compositional ranges disclosed herein are inclusive and combinable (e.g., ranges of "up to about 25 wt%", or, more specifically, "about 5 wt% to about 20 wt%", are inclusive of the endpoints and all intermediate values of the ranges). Weight levels are provided on the basis of the weight of the entire composition, unless otherwise specified; and ratios are also provided on a weight basis. Moreover, the term "combination" is inclusive of blends, mixtures, alloys, reaction products, and the like.

Furthermore, the terms "first," "second," and the like, herein do not denote any order, quantity, or importance, but rather are used to distinguish one element from another. The terms "a" and "an" herein do not denote a limitation of quantity, but rather denote the presence of at least one of the referenced items. The modifier "about" used in connection with a quantity is inclusive of the stated value, and has the meaning dictated by context, (e.g., includes the degree of error associated with measurement of the particular quantity).

Moreover, in this specification, the suffix "(s)" is usually intended to include both the singular and the plural of the term that it modifies, thereby including one or more of that term (e.g., "the compound" may include one or more compounds, unless otherwise specified). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described inventive features may be combined in any suitable manner in the various embodiments.

The hydrocarbon fuel described herein may contain a blend of a large number of chemical compounds - perhaps over 1,000 individual compounds. However, the fuel primarily comprises hydrocarbons, i.e., saturated alkanes ("paraffins"). In embodiments in which the fuel composition comprises both a bio-based fuel and a petroleum-based fuel, the composition further comprises aromatics, olefins, and naphthalenes. (Non-limiting examples of these materials include benzene and its derivatives, xylene and its derivatives; naphthalene and its derivatives; and combinations thereof).

The alkanes themselves can be linear alkanes, branched alkanes, or combinations thereof, as well as the cyclic alkanes referred to below. The alkane component usually comprises C₇ to C₁₈ saturated alkanes (iso-saturated or normal-saturated). In some specific embodiments, at least about 70 weight percent of the saturated alkanes have a carbon chain length of C₁₀ to C₁₂.

As used herein, "cyclo-saturated alkanes" generally refers to compounds having one or more rings of carbon atoms. The cycloalkanes contain only carbon and hydrogen, and may include a wide variety of side-chains. Non-limiting examples of the cycloalkanes include cyclopentane, butylcyclopentane, methyl cyclopentane, methylpropylcyclopentane, dimethylethylcyclopentane, tetramethylcyclopentane, dimethyl cyclopentane, ethyl cyclopentane, methylbutylcyclopentane, ethylpropylcyclopentane, cyclohexane, n-butyl cyclohexane, isobutyl cyclohexane, propylcyclohexane, methylethylcyclohexane, trimethylcyclohexane, methyl cyclohexane, dimethyl cyclohexane, ethyl cyclohexane, cycloheptane, cyclooctane, indane, pentylcyclopentante, adamantane, and decalin. Usually, the total amount of cycloalkanes (if present) is no greater than about 15 volume percent, based on the total volume of the fuel composition. In some embodiments, the amount is no greater than about 5 volume percent, e.g., about 0.1 volume percent to about 5 volume percent.

For most embodiments of this invention, the weight ratio of iso-saturated alkanes and cyclo-saturated alkanes (the total) to normal-saturated alkanes is at least about 2.0. In some specific embodiments, the weight ratio is at least about 5.0. (For the sake of simplicity in this disclosure, the ratio will sometimes be referred to as the "i-n ratio") These proportions result in a fuel with characteristics that are especially advantageous in a number of ways. First, the freeze point (or "freezing point") of the fuels is decreased, as compared to the freeze point of fuels with a lower i-n ratio, and as compared to conventional, petroleum-based fuels. As alluded to previously, the decreased freeze point is very important for successful use of the fuel at lower ambient temperatures. Second, in most embodiments, the fuel is characterized by a higher energy density, as compared to fuels with a lower i-n ratio. A third characteristic, related to the increased energy density, is that the fuel has the tendency to bum more "cleanly", with a decreased level of combustion byproducts such as smoke and soot.

At least a portion of the fuel composition of this invention is bio-derived. As used herein, a "bio-derived" fuel generally refers to a fuel which is produced from renewable biological resources, such as plant biomass, tree biomass, and treated-municipal and industrial waste. Non-limiting examples of processes for preparing bio-derived fuel compositions, and related technology, can be found in U.S. Patent Publications 2009/0259082 (Deluga et al); 2009/0158663 (Deluga et al); 2008/0244962 (Abhari et al) and 2008/0092436 (Seames et al); all incorporated herein by reference.

In some preferred embodiments, the bio-derived fuel composition is produced by a technique which comprises hydro-treating renewable oils, as described in the above-referenced Publication 2009/0259082. As an example, the process can employ a bio-oil feedstock, from which a bio-oil can be extracted. Non-limiting examples of suitable bio-oils are discussed in the Deluga '082 reference, and include oil bearing seeds like soybean, colza, camelina, canola, rapeseed, corn, cottonseed, sunflower, safflower, flax, olive, peanut, shea nut, and the like. The bio-oil feedstock may also include inedible varieties like linseed, castor, jatropha and the like. Other parts of trees can also be the source of the bio-oil feedstock, e.g., the kernels from trees like coconut, babassu and palm. The bio-oil feedstock may also include certain algae, microalgae, seaweeds and microbes that produce oil.

According to the process set forth in Publication 2009/0259082, extraction of the bio-oil from the bio-oil feedstock also produces a substantially deoiled residue, as a byproduct. As further mentioned below, at least a portion of this residue can be gasified, to generate a hydrogen-containing gas. The hydrogen gas can be enriched in hydrogen content, and can then be used for a number of purposes.

In preparing the fuel composition from a bio-oil feedstock, the bio-oil is subjected to an upgrading procedure. Such a procedure is described in detail in Publication 2009/0259082, and typically involves a hydro-treating step. Hydro-treating can be followed by a hydro-isomerization step, and then a separation step, which separates various components of the isomerization products.

The hydro-treating step differs significantly from the hydro-treating operations which are common in the petroleum industry, i.e., in the refining of crude oil. (Petroleum-based feedstock includes asphalt, aromatics, or ring compounds, with carbon chain lengths of about C₃₀. In contrast, bio-oils typically include relatively high levels of compounds such as triglycerides, fatty acids and other esters of fatty acids.) In the case of bio-oil processing, hydro-treating is primarily employed to effect hydro-deoxygenation. Oxygen does not add to the heating value of the fuel product and hence, it is desirable to keep the concentration of oxygen at relatively low levels. In some embodiments, the oxygen concentration is reduced to levels as low as about 0.004% by weight.

The hydro-treating reaction also involves the saturation of the double bonds. It removes the double bonds from the components of bio-oil, and this reduces the problems associated with unsaturated compounds that would readily polymerize and cause fuel instability and problems in combustion. The hydrogen reacts with the triglycerides to form hydrogenated triglycerides. The hydrogenated triglycerides further react with hydrogen to form diglycerides, monoglycerides, acids, and waxes. These materials further react with hydrogen, to undergo hydro-deoxygenation to form linear alkanes. As described herein, some of the products include propane, as well as linear C₁₆ and C₁₈ alkanes.

Other details regarding exemplary hydro-treating operations are provided in Publication 2009/0259082. Transition metal sulfides are generally used as catalysts for hydro-treating, e.g., sulfides of NiMo or CoMo. Typical temperatures maintained during hydro-treating are between about 200°C and about 450°C. A typical pressure range for the hydro-treating operation is between about 10 bar and about 80 bar. In some embodiments, the pressures of about 40 to about 60 bar, and temperatures of about 280°C to about 350°C, may be more preferred. Moreover, an illustrative reaction scheme for the hydrogenation of a triglyceride-based vegetable oil, such as soybean oil, is provided in the '082 publication.

The hydro-treating reaction produces water molecules, CO₂, and some light hydrocarbons such as propane, in addition to (long chain) linear alkanes, which are the desired products. These additional products can be separated from the linear alkanes, before the step of hydro-isomerization. The water may be used for various purposes, e.g., to form steam, which can be used in a gasification reaction, discussed below. The light hydrocarbons like propane can be used as a fuel to generate heat energy, e.g., in a steam generating system like a boiler.

As described in Publication 2009/0259082, the hydro-treating reaction is usually followed by a hydro-isomerization reaction (sometimes referred to herein as simply an "isomerization reaction" or "isomerization"). In this step, the linear alkanes present in the mixture are reacted with hydrogen, in the presence of specified catalysts, to produce branched compounds, i.e., branched isomers. The branched isomers of light paraffins have higher octane numbers than the corresponding normal straight alkanes and hence, are often a desirable component of the fuel. For products such as jet fuel, the specifications require that the octane number for a lean mixture of the grade 80 fuel should be about 80 at minimum. (The contents of ASTM Standard D 7566-09 ("Standard Specification for Aviation Turbine Fuel Containing Synthesized Hydrocarbons", © ASTM International, 2009, are incorporated herein by reference). For other grades of jet fuel, such as grade 100, the value is required to be about 91, and for grade 100 LL (Low Lead), the octane value needs to be at about 99.5 at a minimum. As mentioned previously, the fuel composition of the present invention is dependent on a specified proportion of iso-saturated alkanes and cyclo-saturated alkanes (the total) to normal-saturated alkanes.

A number of different types of catalysts can be used in the hydro-isomerization step. Examples are provided in Publication 2009/0259082, and include noble metal catalysts such as platinum. Other examples are zeolite materials, or solid acid catalysts. In some embodiments, the catalyst system comprises a combination of silica-alumina, alumina, and at least one group VIII metal, i.e., iron, cobalt, nickel, ruthenium, rhodium, palladium, osmium, iridium, or platinum. Such a catalyst system is described in Patent Application 12/344,291 (Deluga et al), filed on December 26, 2008, and incorporated herein by reference. In one more specific example, the catalyst composition comprises:
about 5 weight percent to about 70 weight percent of silica-alumina;
about 30 weight percent to about 90 weight percent alumina; and
about 0.01 weight percent to about 2.0 weight percent of a group VIII metal.

Such a catalyst composition can further comprise about 5 weight percent to about 70 weight percent of a zeolite. In some embodiments, the zeolite comprises silicon and aluminum; at a ratio (weight) in the range of about 1.0 to about 300. Non-limiting examples of the zeolites are as follows: zeolite Y, zeolite beta, ferrierite, mordenite, zeolite ZSM-22/23, and zeolite ZSM-5.

In terms of other operating parameters for the hydro-isomerization step, typical temperatures are maintained in the range of about 200°C and about 450°C. A typical pressure range for the operation is between about 10 bar and about 80 bar. In some embodiments, a pressure range of about 40 to about 60 bar, and a temperature range of about 275°C to about 350°C, may be more preferred. As also described in Publication 2009/0259082, the isomerization reaction involves rearrangement of the alkyl groups.

As also mentioned previously, a separation step is often undertaken, after hydro-isomerization. This step is very useful in separating the various components which constitute the isomerization products. The step can comprise one or more procedures. As an example, different fractions of the isomerization products can be separated, based on boiling point ranges. Exemplary techniques include flash distillation, fractionation, and the like.

The separation step can also involve a flash operation, wherein the products of the hydro-isomerization step are sent at a high pressure to a flash vessel, and are subjected to a low pressure. Typically, two streams are formed -the gaseous stream rich in more volatile components, and the liquid stream, which contains a higher percentage of lower volatile components. A cascade of such separations, or a distillation column, may be employed. The separation step may also include a fractionation column, where multiple components (e.g., light hydrocarbons) can be separated in a single column. Moreover, in some embodiments, at least a portion of the light hydrocarbon generated in the hydro-treating operation, or the light hydrocarbon generated in the hydro-isomerization operation, is sent to the separation operation. (Both light hydrocarbon streams can be sent as well). In general, the separation step allows for greater control of the composition of the product fuel.

As mentioned previously, at least a portion of the substantially deoiled residue which is produced by one or more extraction steps can be gasified, to generate a hydrogen-containing gas. Various gasification techniques can be employed. One useful operation is described in a copending application filed on December 21, 2007, Serial No. 11/962,245, which is incorporated herein by reference. As described in Publication 2009/0259082 and in S.N. 11/962,245, a portion of the light hydrocarbon product is sometimes used to prepare a slurry of deoiled residue. (The slurry can be aqueous in some instances, as well). The presence and combustion of the light hydrocarbon compounds in the gasification reactor, either through direct injection, or with the slurry of deoiled residue, produces a high operating temperature in the gasifier. This results in an in-situ reduction of the tars, which are otherwise generated during gasification of biomass materials such as deoiled residue.

In an alternative embodiment, the gasification of the deoiled residue can be carried out in a conventional manner, with a dry feed, and without the use of any light hydrocarbon material. The resultant tar-laden gas is subjected to a reforming step to reduce the tars. In this embodiment, the light hydrocarbon stream can be injected into the reformer, which is positioned downstream of the gasifier. The light hydrocarbon can undergo complete or partial combustion in the reformer, resulting in higher temperatures in the reformer section. Higher temperatures in turn result in the cracking of tars. The higher the temperature in the reformer section, the greater degree of tar cracking, thus leading to greater tar reduction. Thus, in this embodiment, tars which are formed in the gasifier are subjected to cracking in the reformer section, which is immediately downstream of the gasifier. The reduction of tar content ensures a more efficient operation.

Gasification of the substantially deoiled residue is especially advantageous for many embodiments, due the resulting generation of the hydrogen-containing gas. For example, most or all of the hydrogen stream can be used in the upgrading operation described above, i.e., in hydro-treating and/or in hydro-isomerization. Moreover, the hydrogen can be used for a number of different purposes, e.g., combustion, fuel cell operation, and a wide variety of other industrial operations.

A number of other embodiments are contemplated in the production of a fuel composition according to this invention. Many are described in Publication 2009/0259082. For example, a hydrogen enrichment step can be incorporated into the gasification operation, e.g., by subjecting the gasification product stream ("syngas") to a water gas shift (WGS) reaction. In general, WGS technology is known in the art. For the present invention, the WGS step converts (removes) carbon monoxide from the syngas, and adds hydrogen to it, resulting in the enrichment. Moreover, in some embodiments, the hydrogen enrichment process can include a hydrogen-selective membrane unit.

As also described in Publication 2009/0259082, the gasification operation can include an acid gas removal unit. This station can be used to remove acid gases such as hydrogen sulfide, which is the predominant form of sulfur compounds which would typically originate in the gasifier. (The amount of sulfur that is present depends in large part on the type of initial bio-oil feedstock).

Another embodiment of this invention is directed to a method for preparing a fuel composition, as mentioned above. A key step in the method is the preparation of the bio-derived fuel component, which includes a mixture of iso-saturated alkanes and normal-saturated alkanes. A determination is then made, as to whether the ratio of iso-saturated alkanes to normal-saturated alkanes in the bio-derived component is at least about 2.0. If the ratio meets that requirement, then the composition satisfies a key parameter for the invention.

In preferred embodiments for a composition intended for use as an aviation fuel, the bio-derived fuel component is usually blended with a petroleum-derived component. Non-limiting examples include the commercial fuels mentioned previously, such as JP-8. The petroleum-derived component supplies aromatic content to the overall composition, which is important for most embodiments. The aromatic content of the petroleum-derived component is at least about 16 % by volume, as measured by ASTM D2425. (In some specific embodiments, at least about 65% by weight of the bio-derived component comprises iso-saturated alkanes and normal-saturated alkanes that have a carbon chain length of C₁₀ to C₁₂, wherein the ratio of iso-saturated alkanes to normal-saturated alkanes for each respective C₁₀ to C₁₂ combination of alkanes is at least about 2.0.). The resulting fuel composition can be characterized has having:
(I) a flash point of at least about 35°C;
(II) a freeze point less than about -50°C;
(III) a fuel density of at least about 0.73 g/ml; and
(IV) an energy density of greater than about 44 MJ/kg.

As described previously, some specific embodiments of the composition comprise about 59 volume percent to about 92 volume percent of a mixture of iso-saturated alkanes and normal-saturated alkanes having a flash point in the range of about 35°C to about 60°C. The compositions often comprise about 8 volume percent to about 25 volume percent aromatic compounds. If olefinic compounds are present, they are usually limited to about 1 volume percent or less. Moreover, the usual range of cyclic compounds, when present, is in the range of about 0.05 volume percent to about 15 volume percent. The composition is characterized by the i-n ratio specified previously, and has a freeze point less than about -50°C, and in some instances, less than about -40°C.

As also mentioned previously, another aspect of this invention relates to a method of powering a turbine engine. The concepts upon which the turbine engine is based are known in the art, and are generally described in many references. Non-limiting examples include U.S. Patents 5,661,969;4492,085; and 4,374,466, all of which are incorporated herein by reference. Turbine engines typically contain three primary units: a compressor, a combustion chamber, and a turbine. Air which is drawn into the compressor is compressed (and thus becomes heated). The compressed air is directed into the combustion chamber, and a suitable hydrocarbon fuel is injected and ignited. The burning air/fuel mixture expands, and provides energy to the turbine. The air stream exiting the turbine can be used as propulsion (e.g., a jet engine), or can be used to provide power in a mechanical system (e.g., a power turbine). There are may different types of turbine systems and turbine applications which fall within the scope of this invention. The use of the hydrocarbon fuel described herein provides very important advantages for many of those applications.

### EXAMPLES

The examples presented below are intended to be merely illustrative, and should not be construed to be any sort of limitation on the scope of the claimed invention.

### Example 1

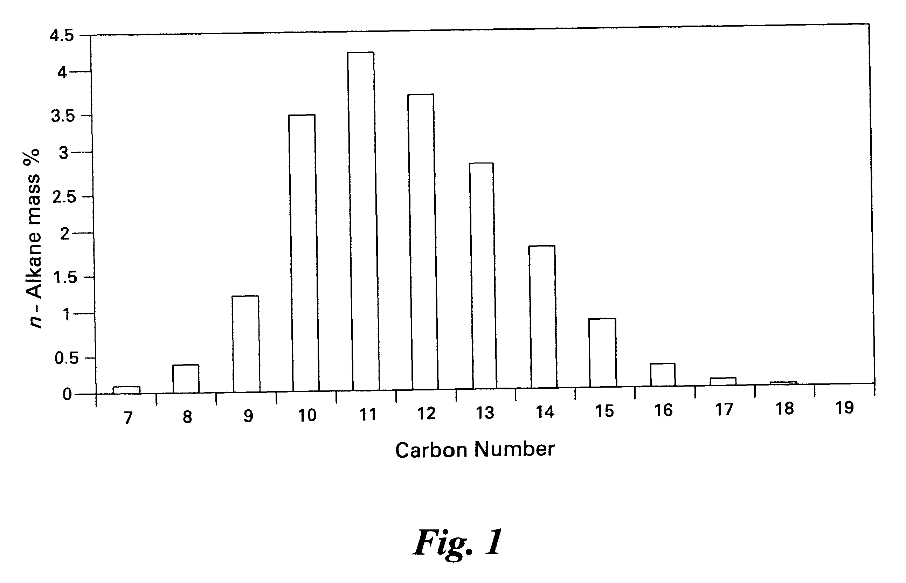

A petroleum-based sample of jet fuel, designated as grade JP-8, was analyzed, using Detailed Hydrocarbon Analysis (DHA) techniques. The sample was determined to contain, by volume, 31 % iso-alkanes and 19% normal-alkanes (paraffins). The remaining 50% of the sample included constituents such as cycloparaffins, alkylbenzenes, and multi-ringed species. For this sample, the ratio of iso-alkane compounds to normal-alkane compounds ("i/n") was 1.63. FIG. 1 is a bar graph which expresses the relative amount of each of the predominant n-alkane compounds in the sample. The sum of the constituents in the figure is 19% by volume.

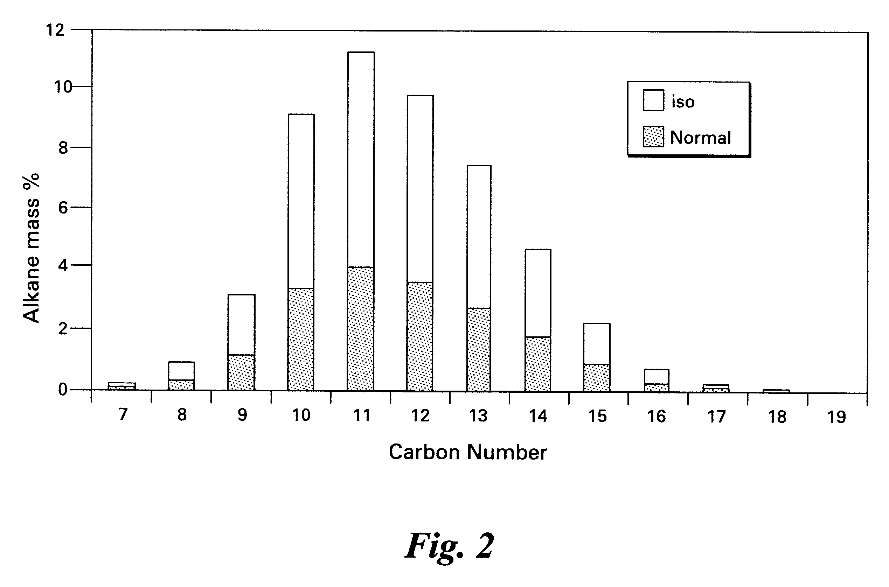

A second figure was constructed, expressing the particular n-alkane compounds as a function of alkane mass. (See FIG. 2). The data for this figure is based in part on the assumption that the i/n ratio is constant, by carbon number. While this assumption may not be entirely accurate, it appears to be accurate enough to demonstrate several points regarding the composition.

The freeze point of the sample in this example was -51°C. It is believed that the presence of non-paraffinic components depressed the freeze point, below the value that would have been obtained if the sample had only contained iso-and normal-alkanes.

A number of samples of commercial jet fuel compositions, (designated by well-known terminology), were analyzed. (See the CRC Report No. 647, "World Fuel Sampling Program", Coordinating Research Council, 2006). The samples were as follows: Jet A, Jet A-1, JP-5, and JP-8, and were obtained from various regions of the world. The samples described in this report had an alkane content (i.e., paraffin content) which ranged from 37.5% to 67.9%. The data for the samples obtained from AFRL (see above) were consistent with this analysis. (The CRC report contained no measurement of the relative amount of iso-alkanes and normal-alkanes in the samples which were analyzed).

### Example 2

Three samples were prepared, using food-grade coconut oil. The coconut oil (approximately 1 liter) was directed through a reactor, and subjected to hydro-treating conditions, as follows:
Temperature: 320°C
Pressure: 52.2 bar
Hydrogen flow rate: 6000 scf/bbl
Liquid hourly space velocity: 1 lhsv
Catalyst system: 0.1% sulfide compound, on alumina-supported CoMo.

A two phase mixture resulted, and the organic layer was separated from the water-byproduct by decanting. The organic constituent was then purged with nitrogen, to remove residual catalyst byproduct.

The organic constituent was then separated into a number of different volumes (samples). In each instance, the following hydro-treating/isomerization conditions were maintained:
Temperature: 295-305°C
Pressure: 52.2 bar
Hydrogen flow rate: 2000 scf/bbl
Liquid hourly space velocity: 0.35-0.75 1hsv
Catalyst system: Mixture of zeolite, gamma alumina, and amorphous silica-alumina, and a Group VIII metal (< 1 wt. %)

The resulting liquid was fractionated by distillation, to obtain a number of samples. Each sample had a very similar carbon number distribution, but differed from the other samples, in terms of iso/normal ratios. For each sample, 200 ml of the hydro-treated product was distilled, using an insulated column packed with glass beads, and having a length of 6 inches (15.2 cm), and a diameter of 0.5-inch (1.3 cm). Each sample was collected with a pot temperature regimen extending from 305°C-330°C.

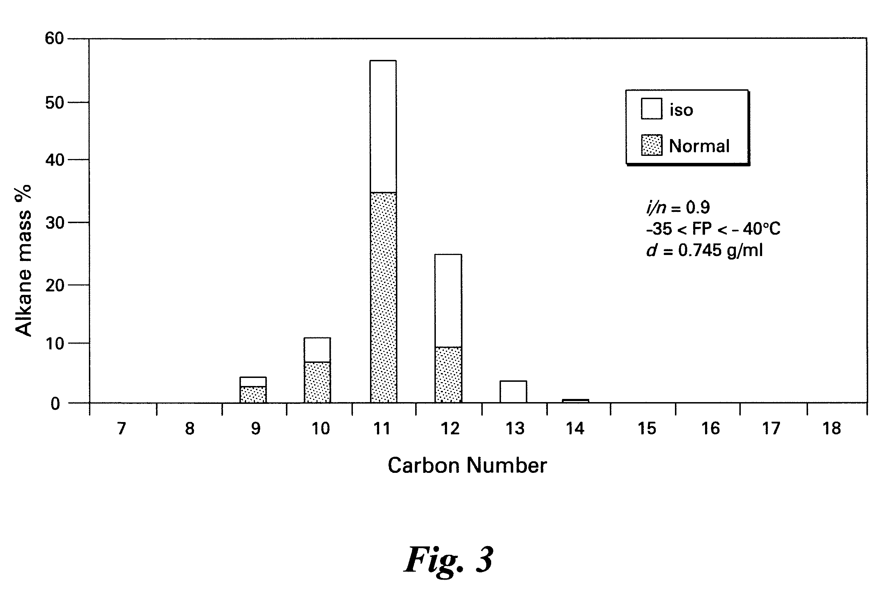

Sample A had a composition outside the scope of this invention. The composition is expressed in FIG. 3, which is a plot of n-alkane and i-alkane compounds (by way of carbon number), as a function of mass percent. Sample A was similar to the petroleum-derived sample depicted in Example 1 (i/n ratio of 1.0), without the presence of any aromatic compounds or additives. The hydro-treating conditions for this sample included temperature levels of 290°C, and an lhsv value of 0.75. Sample A had a density of 0.745 g/ml. The sample had a freeze point between - 35°C and -40°C, which did not meet the current specification for most jet fuels (-47°C).

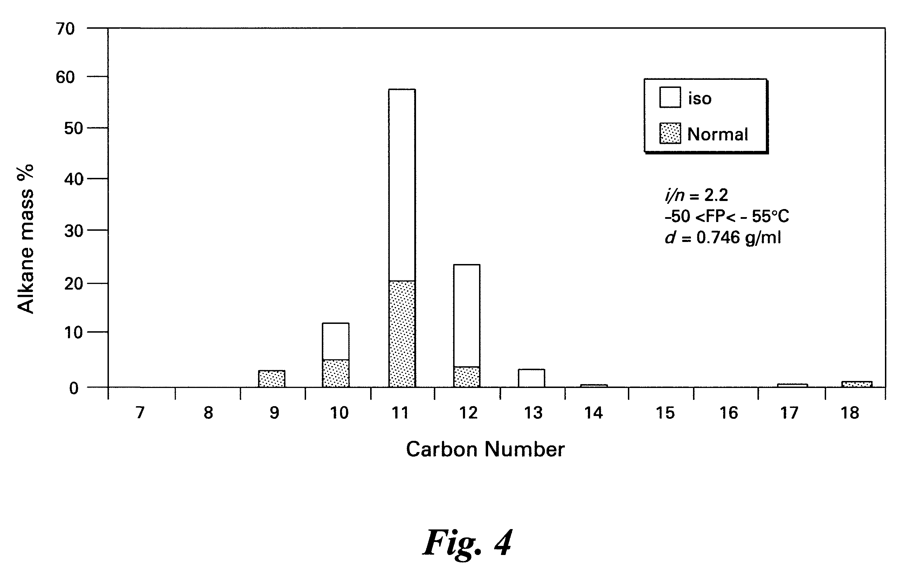

Sample B had a composition within the scope of this invention. Compositional parameters are depicted in FIG. 4, which is also a plot of n-alkane and i-alkane compounds, as a function of mass percent. The hydro-treating conditions for this sample included temperature levels of 300°C, and an lhsv value of 0.35. The i/n ratio for Sample B was 2.2. The sample had a density of 0.746 g/ml. Sample B had a freeze point between -50°C and -55°C, which meets the current specification for jet fuel (-47°C). In general, Sample B conformed to substantially all specifications for commercial jet fuel, with the exception of density.

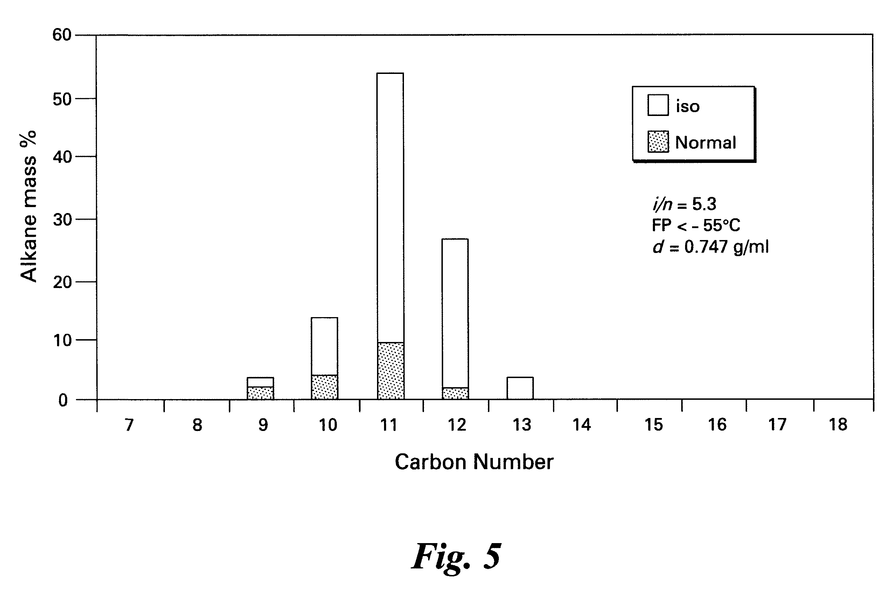

Sample C had a composition which was also within the scope of this invention. Its characteristics are depicted in FIG. 5, which is another plot of n-alkane and i-alkane compounds, as a function of mass percent. The hydro-treating conditions for this sample included temperature levels of 305°C, and an lhsv value of 0.5 lhsv. The i/n ratio for Sample C was 5.3. The sample had a density of 0.747 g/ml. Sample C had a freeze point of less than -55°C, which would generally meet or surpass all current specifications for cold-weather behavior.

### Example 3

This example generally describes various catalyst systems which may be used for isomerization steps in some embodiments of the invention. (The subject matter of these examples is also set forth in pending Patent Application S.N. 12/344,291, filed on December 26, 2008), and mentioned previously. The distribution of product compounds when hydro-treating soy oil (hydro-isomerization/ hydrocracking) over three different catalyst compositions was observed. Hydro-treated soy oil is a roughly 50/50 mixture of n-heptadecane and n-octadecane. In one instance, a catalyst comprising 30 weight percent zeolite beta, 69.5 weight percent alumina binder, and 0.50 weight percent platinum is used in the hydro-isomerization of a soy oil feedstock. The isomerization of the feedstock occurs preferentially, with relatively low levels of C₇ to C₁₄ isomerized product.

### Example 4

Another test involves the hydro-treatment of a soy oil feedstock over a catalyst comprising a 30 weight percent silica-alumina support as the active component, 69.5 weight percent alumina binder, and 0.50 weight percent platinum. In this instance, a higher level of hydro-isomerization is observed in the product compounds, as compared to Example 3.

### Example 5

In this example, a catalyst comprising 25 weight percent zeolite beta, 25 weight percent silica-alumina support, 49.5 weight percent alumina binder, and 0.50 weight percent platinum is used in the hydro-isomerization of the soy oil feedstock. The use of this mixed catalyst results in a higher ratio of isomerized product to non-isomerized product relative to Examples 3 and 4, which provides a better freezing point, flash point and combustion characteristic for the resulting middle distillate fuel.

The present invention has been described in terms of some specific embodiments. They are intended for illustration only, and should not be construed as being limiting in any way. Thus, it should be understood that modifications can be made thereto, which are within the scope of the invention and the appended claims.

## Claims

1. A method for preparing a fuel composition, comprising the steps of:
(i) preparing a bio-derived fuel component comprising a mixture of iso-saturated alkanes and normal-saturated alkanes;
(ii) determining if the ratio of iso-saturated alkanes to normal-saturated alkanes in the bio-derived component is at least about 2.0; and
(iii) combining the bio-derived fuel component with a petroleum-derived component if the ratio of iso-saturated alkanes to normal-saturated alkanes in the bio-derived component is determined to be at least about 2.0;
wherein the aromatic content of the petroleum-derived component is at least about 16 % by volume, as measured by ASTM D2425; and wherein the resulting fuel composition is characterized as having:
(I) a flash point of at least about 35°C;
(II) a freeze point less than about -50°C;
(III) a fuel density of at least about 0.73 g/ml; and
(IV) an energy density of at least about 44 MJ/kg.

2. A fuel composition, comprising
a) about 59 volume percent to about 92 volume percent of a mixture of iso-saturated alkanes and normal-saturated alkanes having a flash point in the range of about 38°C to about 60°C;
b) about 8 volume percent to about 25 volume percent aromatic compounds; and
c) about 0.05 volume percent to about 15 volume percent cyclic compounds; wherein the weight ratio of iso-saturated alkanes to normal-saturated alkanes is at least about 2.0; the composition has a freeze point less than about -50°C; and
wherein at least a portion of the fuel composition is derived from an upgraded bio-oil that is extracted from a bio-oil feedstock; and
wherein a byproduct from the extraction step is treated to produce a hydrogen-containing gas used in the upgrading step.

3. The fuel composition of claim 2, wherein the weight ratio of iso-saturated alkanes to normal-saturated alkanes is at least about 5.0.

4. The fuel composition of claim 2 or claim 3, wherein at least about 70 weight % of the saturated alkanes have a carbon chain length of C₁₀ to C₁₂.

5. The fuel composition of claim 4, wherein each saturated alkane of carbon chain length C₁₀ to C₁₂ comprises a combination of iso-saturated alkanes and normal-saturated alkanes, and the ratio of iso-saturated alkanes to normal-saturated alkanes for each respective C₁₀ to C₁₂ combination of alkanes is at least about 2.0.

6. A method of powering a turbine engine by burning a hydrocarbon fuel, comprising the step of combining the fuel with air in at least one combustion section of the turbine engine, and igniting the air-fuel mixture which is directed out of the engine to provide engine power,
wherein the fuel comprises a mixture of iso-saturated alkanes and normal-saturated alkanes having a flash point of at least about 35°C; and the weight ratio of iso-saturated alkanes to normal-saturated alkanes is at least about 2.0.

7. The method of claim 6, wherein the hydrocarbon fuel comprises alkanes and aromatic compounds.

8. The method of claim 6 or claim 7, wherein the alkanes are selected from the group consisting of linear alkanes, branched alkanes, cyclic alkanes, and combinations thereof.

9. The method of claim 7, wherein the aromatic compounds are selected from the group consisting of benzene and its derivatives, xylene and its derivatives; naphthalene and its derivatives; and combinations thereof.

10. The method of any one of claims 6 to 9, wherein the weight ratio of iso-saturated alkanes to normal-saturated alkanes is at least about 5.0.

11. The method of any one of claims 6 to 10, wherein at least a portion of the hydrocarbon fuel is bio-derived.

12. The method of any one of claims 6 to 11, wherein at least about 35 weight % of the hydrocarbon fuel is bio-derived.

13. The method of claim 11 or claim 12, wherein the bio-derived portion is produced by a technique which comprises hydro-treating renewable oils.

14. The method of any one of claims 11 to 13, wherein the bio-derived portion is produced by a technique which comprises hydro-treating and isomerizing renewable oils.

15. The method of any one of claims 6 to 14, wherein at least about 70 weight % of the saturated alkanes have a carbon chain length of C₁₀ to C₁₂

16. A method for lowering the freeze point of a hydrocarbon fuel composition which comprises a mixture of iso-saturated alkanes and normal-saturated alkanes having a flash point of at least about 35°C, comprising the step of increasing the weight ratio of iso-saturated alkanes to normal-saturated alkanes in the composition, from a ratio of about 1.0 to at least about 2.0.
